# EUROPÄISCHE PATENTANMELDUNG

(11) **EP 1 842 611 A1**
(43) Veröffentlichungstag der Anmeldung: **10.10.2007**
(21) Anmeldenummer: 07007236.8
(22) Anmeldetag: 05.04.2007
(51) Int. Cl.: B23B 45/00, B23Q 1/00, B25H 1/00

(54) **Mobile Ständerbohrmaschine**

(30) Priorität: 07.04.2006 DE 202006005727 U
(71) Anmelder: Phoenix Handelsmarketing GmbH & Co. KG, 85609 Aschheim (DE)
(72) Erfinder: Die Erfindernennung liegt noch nicht vor
(74) Vertreter: Grünecker, Kinkeldey, Stockmair & Schwanhäusser Anwaltssozietät

(57) **Zusammenfassung**

Die vorliegende Erfindung betrifft eine mobile 5tänderbohrmaschine mit einer Bohreinheit, einem die Bohreinheit tragenden Tragarm und einem Bohrtisch. Um eine mobile Ständerbohrmaschine zu schaffen, welche bei verbesserter Mobilität eine gute Funktionalität hat, wird vorgeschlagen, den Tragarm relativ zum Bohrtisch zwischen einer Arbeitsstellung, in welcher der Tragarm bezüglich des Bohrtisches aufgerichtet ist, und einer Transportstellung, in welcher der Tragarm bezüglich des Bohrtisches umgeklappt ist, schwenkbar vorzusehen.

## Beschreibung

Die vorliegende Erfindung betrifft eine mobile Ständerbohrmaschine mit einer Bohreinheit, einem die Bohreinheit tragenden Tragarm und einem Bohrtisch.

Eine mobile Ständerbohrmaschine ist aus der EP 1 522 376 A1 bekannt. Sie kann im Ganzen von einem Bediener getragen werden. Alternativ kann sie auf einfache Weise für einen Transport in ihre Hauptbestandteile zerlegt werden und ist ebenso leicht wieder zusammenbaubar. Auf diese Weise kann die Ständerbohrmaschine einfach an verschiedenen Standorten zum Einsatz gebracht werden.

Der vorliegenden Erfindung liegt die Aufgabe zugrunde, eine mobile Ständerbohrmaschine zu schaffen, die bei verbesserter Mobilität eine gute Funktionalität hat.

Die Aufgabe wird erfindungsgemäß gelöst mit einer mobilen Ständerbohrmaschine mit den Merkmalen des Anspruches 1.

In der Arbeitsstellung können mit der mobilen Ständerbohrmaschine auf übliche Weise Bohrungen ausgeführt werden. Durch Schwenken des Tragarmes in die Transportstellung wird die Ständerbohrmaschine in einen zusammengeklappten Zustand gebracht, in welchem sie weniger Raum einnimmt. So ist die Ständerbohrmaschine einfach transportierbar und dabei gut unterbringbar. Durch Zurückschwenken des Tragarmes in die Arbeitsstellung ist die Ständerbohrmaschine mit wenigen Handgriffen wieder einsatzbereit.

Bevorzugterweise kann die Bohreinheit relativ zum Tragarm verschiebbar sein. Hierdurch sind nicht nur verschiedene Bohrhöhen einstellbar, sondern es lassen sich auch die Außenabmessungen der Ständerbohrmaschine für den Transport weiter verringern. So wird ein noch kompakteres Packmaß erreicht.

Besonders günstig kann die Bohreinheit am Tragarm festklemmbar sein. Hierdurch wird auf einfache Weise die Lage der Bohreinheit relativ zum Tragarm gesichert.

Besonders vorteilhaft kann die Bohreinheit in einer geschlitzten Haltehülse des Tragarms aufgenommen sein. Durch Verengen des Schlitzes kann die Bohreinheit am Tragarm festgeklemmt werden.

Besonders bevorzugt kann der Tragarm in einer Schwenkstellung lösbar fixierbar sein. Auf diese Weise wird er sicher in dieser Stellung gehalten, solange es erforderlich ist.

Vorteilhafterweise kann ein Gelenk, mit welchem der Tragarm relativ zum Bohrtisch schwenkbar gelagert ist, in einer Schwenkstellung festklemmbar sein. Hierdurch wird der Tragarm in einer gewünschten Lage gehalten.

Günstigerweise kann das Gelenk einen geschlitzten Außenlagerring aufweisen, welcher auf einem Innenlager drehbar gelagert ist. Durch Verengen des Schlitzes kann der Tragarm in seiner Schwenkstellung festgeklemmt werden.

Bevorzugterweise kann wenigstens ein Schwenkpositionierer vorgesehen sein, mit welchem der Tragarm in einer vorbestimmten Schwenkstellung positionierbar ist. Mit Hilfe des Schwenkpositionierers kann der Tragarm einfach und mit guter Genauigkeit in eine vorbestimmte Schwenkstellung gebracht werden.

In einer Weiterbildung der Erfindung kann wenigstens ein Endanschlag vorgesehen sein, mit welchem sich der Tragarm in seiner Arbeitsstellung und/oder in seiner Transportstellung in Anlage befindet. Durch das Anliegen am Anschlag weiß ein Bediener, dass sich der Tragarm nun in der vorgesehenen Arbeits- oder Transportstellung befindet.

Vorzugsweise kann der Tragarm eine fachwerkartige Struktur aufweisen. Durch diese ist er für den Transport leicht ausgebildet und ist dennoch stabil.

Besonders günstig kann der Tragarm aus Aluminium oder Grauguss hergestellt sein. Aus Aluminium hergestellt, ist er für den Transport leicht. Ein aus Grauguss hergestellter Tragarm ist gut schwingungsdämpfend.

Bevorzugterweise kann der Bohrtisch aus Aluminium oder Grauguss hergestellt sein. Ein aus Aluminium hergestellter Bohrtisch ist für den Transport leicht. Besteht er aus Grauguss, hat er gute schwingungsdämpfende Eigenschaften.

Besonders vorteilhaft kann der Bohrtisch ein Strangpressprofil sein. Durch Strangpressen kann der Bohrtisch gut mit durchgehenden Längsprofilen ausgebildet werden. Werden beispielsweise offene oder geschlossene Hohlprofile ausgebildet, ist der Bohrtisch leicht für den Transport.

Günstigerweise kann ein Akkumulator als Energiequelle für die Bohreinheit im Bohrtisch untergebracht sein. Durch den Akkumulator ist die Ständerbohrmaschine unabhängig von einem Energieanschluss betreibbar, beispielsweise auf Baustellen ohne Energieversorgung. Durch das Unterbringen des Akkumulators im Bohrtisch wird vorhandener Raum genutzt und der Akkumulator ist behinderungsfrei angeordnet. Zudem stabilisiert der Akkumulator im Bohrtisch die Ständerbohrmaschine mit seinem Gewicht.

Bevorzugterweise kann ein Ladegerät für einen Akkumulator im Bohrtisch untergebracht sein. Hierdurch wird vorhandener Raum genutzt und das Ladegerät ist behinderungsfrei aufgenommen.

Vorteilhafterweise kann ein Akkumulator und/oder ein Ladegerät außerhalb eines für einen Bohrer erreichbaren Bereiches angeordnet sein. Damit ist der Akkumulator und/oder das Ladegerät vor Durchbohren geschützt.

Besonders günstig kann außerhalb eines Schwenkbereiches eines Bohrers ein Akkumulator und/oder ein Ladegerät angeordnet sein. Außerhalb des Schwenkbereiches des Bohrers befinden sich der Akkumulator und/oder das Ladegerät außerhalb des für den Bohrer erreichbaren Bereiches.

Bevorzugt kann im Bohrtisch ein Kabelfach vorgesehen sein. So wird für das Kabel vorhandener Raum genutzt und es kann behinderungsfrei untergebracht werden, beispielsweise während des Transports oder des Betriebs der Ständerbohrmaschine.

In einer Weiterbildung der Erfindung kann der Bohrtisch seitlich wenigstens ein Führungsprofil aufweisen, mit welchem ein Schraubstock führbar ist. Auf diese Weise ist das Führungsprofil gut zugänglich und ein in den Schraubstock eingeleitetes Drehmoment kann gut aufgenommen werden.

Vorzugsweise kann der Tragarm an einem Lagerblock befestigt sein, welcher durch Einschieben in ein Lagerprofil des Bohrtisches an diesem angebracht ist. Hierdurch ist die Montage und Demontage des Lagerblocks, gegebenenfalls mit hieran angebrachtem Tragarm, besonders einfach und schnell möglich.

Vorteilhafterweise kann das Lagerprofil im Innern des Bohrtisches vorgesehen sein. So wird vorhandener Raum zum Unterbringen des Lagerprofils genutzt.

Eine Ausführungsform der Erfindung ist in der Zeichnung dargestellt und wird nachfolgend beschrieben. Es zeigen:
- Figur 1: eine perspektivische Ansicht einer erfindungsgemäßen mobilen Ständerbohrmaschine mit einem Tragarm in einer Arbeitsstellung,
- Figur 2: eine perspektivische Ansicht der Ständerbohrmaschine, wobei sich der Tragarm in einer Transportstellung befindet,
- Figur 3: eine perspektivische Ansicht des Tragarmes,
- Figur 4: eine ausschnittsweise perspektivische Ansicht der Ständerbohrmaschine, welche den Tragarm an einem Lagerblock gelagert zeigt;
- Figur 5: eine perspektivische Ansicht des Lagerblocks,
- Figur 6: eine perspektivische Ansicht auf eine untere, hintere und linke Seite eines Bohrtisches der Ständerbohrmaschine,
- Figur 7: eine perspektivische Ansicht auf eine obere, vordere und rechte Seite des Bohrtisches und
- Figur 8: eine perspektivische Explosionsansicht der Ständerbohrmaschine.

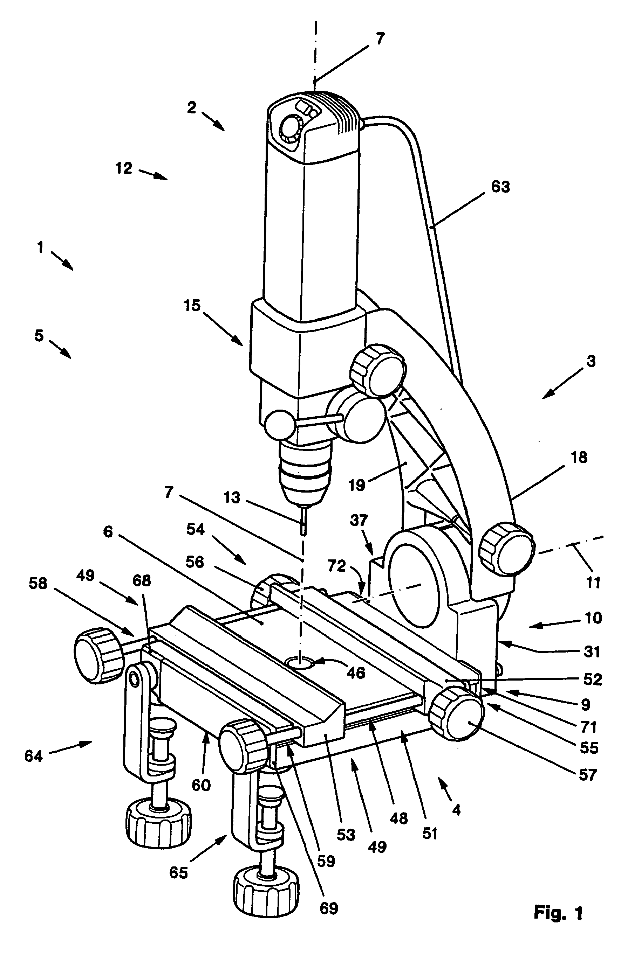

In Figur 1 ist eine erfindungsgemäße mobile Ständerbohrmaschine 1 gezeigt, welche eine Bohreinheit 2, einen die Bohreinheit tragenden Tragarm 3 und einen Bohrtisch 4 aufweist, an welchem der Tragarm 3 befestigt ist. Der Tragarm 3 ist zwischen einer Arbeitsstellung, in welcher der Tragarm bezüglich des Bohrtisches aufgerichtet ist, und einer Transportstellung, in welcher der Tragarm bezüglich des Bohrtisches umgeklappt ist, schwenkbar.

Der Tragarm 3 ist an einem Lagerblock 9 befestigt, welcher seinerseits am Bohrtisch 2 angebracht ist. Der Tragarm 3 und der Lagerblock 9 bilden zusammen ein Gelenk 10 aus, welches eine Schwenkachse 11 definiert, um welche der Tragarm 3 schwenkbar ist.

Die Bohreinheit 2 weist einen Motor, ein Getriebe, eine Bohrspindel und einen Vorschubmechanismus für die Spindel auf. Die Bohreinheit kann stufenlos vorzugsweise in einem Drehzahlbereich von 1000 bis 3000 Umdrehungen pro Minute betrieben werden. Höhere und niedrigere Drehzahlen sind möglich.

In Figur 1 ist beispielhaft eine Arbeitsstellung 5 gezeigt, in welcher der Tragarm 3 etwa senkrecht zu einer Arbeitsfläche 6 des Bohrtisches 4 aufgerichtet ist, wobei eine Bohrachse 7 der Bohreinheit 2 etwa senkrecht zu der Arbeitsfläche 6 verläuft. Es sind jedoch auch andere Arbeitsstellungen möglich, in welchen die Bohrachse 7 schräg zur Arbeitsfläche 6 verläuft.

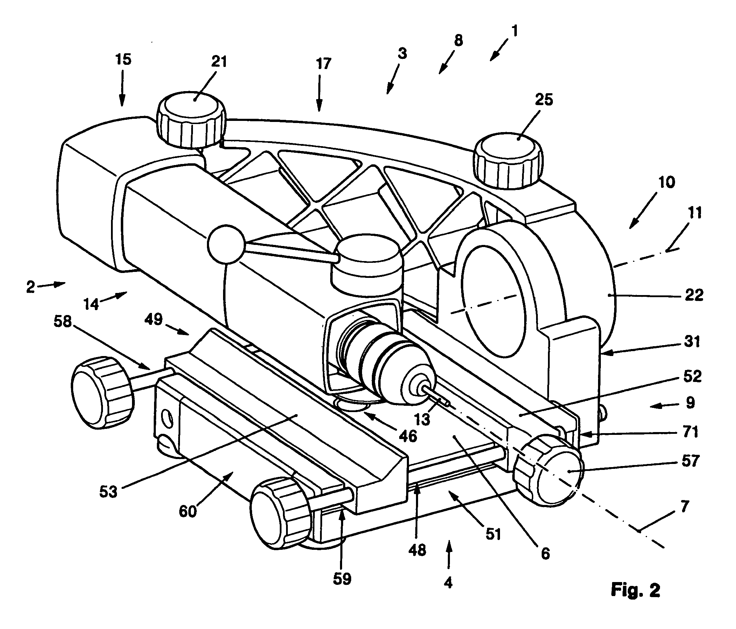

In Figur 2 ist beispielhaft eine Transportstellung 8 des Tragarmes 3 gezeigt, in welcher die Bohrachse 7 etwa parallel zur Arbeitsfläche 6 verläuft.

Die Bohreinheit 2 ist relativ zum Tragarm 3 verschiebbar. In dieser Ausführungsform der Erfindung lässt sie sich entlang der Bohrachse 7 zwischen einer Maximalarbeitsraumposition und einer Minimalposition verschieben. In Figur 1 ist die Bohreinheit 2 in der Maximalarbeitsraumposition 12 gezeigt, wobei die Bohreinheit 2 maximal von der Schwenkachse 11 entfernt ist und maximal nach außen von dem Tragarm 3 vorsteht. Das heißt der Arbeitsraum zwischen der Bohreinheit 2 und der Arbeitsfläche 6 ist zum Bearbeiten hoher Werkstücke maximal. Zum Bearbeiten niedrigerer Werkstücke kann die Bohreinheit 2 in Richtung zu der Schwenkachse 11 verschoben werden.

In Figur 2 ist die Bohreinheit 2 beispielhaft in einer Minimalposition 14 gezeigt, in welcher sie wenigstens bis zu einem Außenende des Tragarmes 3 zurückgezogen ist, das heißt sie steht nach außen nicht über den Tragarm 3 vor. Sie kann beispielsweise außen bündig mit dem Tragarm 3 abschließen oder noch weiter zurückgezogen sein. In der Minimalposition sind die Außenabmessungen der Ständerbohrmaschine noch weiter für einen Transport verringert, wodurch sich ein noch kompakteres Packmaß ergibt.

Die Bohreinheit 2 kann noch über die beschriebene Minimalposition hinaus relativ zum Tragarm 3 verschoben werden, beispielsweise soweit bis sie von ihm abgenommen ist.

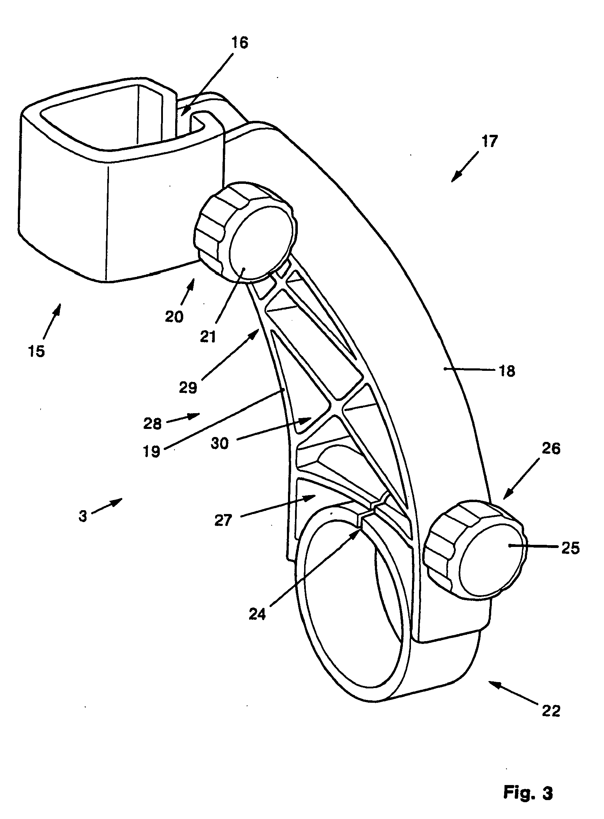

In Figur 3 ist der Tragarm 3 in einer perspektivischen Ansicht vergrößert gezeigt. An seinem in Figur 3 oberen Ende weist er eine Haltehülse 15 auf, in welcher die Bohreinheit 2 aufnehmbar ist, wie in den Figuren 1 und 2 gezeigt, und lösbar fixierbar ist. Die Haltehülse 15 ist geschlitzt ausgeführt. Durch Verengen, des Schlitzes wird die Bohreinheit 2 in der Haltehülse 15 festgeklemmt. In dieser Ausführungsform der Erfindung ist der Schlitz 16 auf Seiten eines Auslegers 17 des Tragarmes 3 vorgesehen. Dabei ist die Haltehülse 15 zum Innenbereich zwischen zwei Längsholmen 18, 19 des Auslegers 17 geöffnet.

Alternativ kann der Schlitz auch an einer zum Ausleger 17 benachbarten oder an einer dem Ausleger 17 gegenüberliegenden Seite der Haltehülse vorgesehen sein.

Der Schlitz 16 wird gegen die federelastische Rückstellkraft der Haltehülse 15 mit Hilfe eines Gewindemechanismus 20 verengt, welcher mit Hilfe eines Drehknopfes 21 betätigt wird.

Das Gelenk 10 ist lösbar fixierbar. Als Teil des Gelenkes 10 weist der Tragarm 3 einen Außenlagerring 22 auf, welcher auf einem Innenlager 23 des Lagerblocks 9 drehbar gelagert wird. Der Außenlagerring 22 ist geschlitzt ausgeführt, wobei durch Verengen des Schlitzes das Gelenk 10 festklemmbar ist. In dieser Ausführungsform der Erfindung ist der Schlitz 24 auf Seiten des Auslegers 17 vorgesehen, wobei der Außenlagerring 22 in Richtung zu einem Innenraum zwischen den Längsholmen 18, 19 geöffnet ist.

Es ist auch möglich, den Schlitz an einer zum Ausleger 17 benachbarten oder an einer dem Ausleger 17 gegenüberliegenden Seite des Außenlagerringes 22 vorzusehen.

Der Schlitz 24 des Außenlagerringes wird mit Hilfe eines mit einem Drehknopf 25 bedienbaren Gewindemechanismus 26 gegen die federelastische Rückstellkraft, insbesondere der des Außenlagerringes 22, verengt.

In dieser Ausführungsform der Erfindung ist eine zwischen den Längsholmen 18, 19 im Bereich des Außenlagerringes 22 vorgesehene Verstärkung 27 in Verlängerung des Schlitzes 24 des Außenlagerringes 22 unterbrochen, um dessen Verengen zu ermöglichen.

Der Tragarm 3 weist eine fachwerkartige Struktur 28 auf, welche mit Hilfe der Längsholme 18, 19 und hierzwischen vorgesehenen kreuzartiger Verstrebungen 29, 30 gebildet wird.

Eine fachwerkartige Struktur ist grundsätzlich auch bei anderen Werkzeugmaschinen, insbesondere Bohrmaschinen, anwendbar.

Der Tragarm ist vorzugsweise aus Aluminium hergestellt. Jedoch kann er auch aus Grauguss hergestellt sein, wobei dieses Material gute schwingungsdämpfende Eigenschaften hat. Der Tragarm ist vorzugsweise einstückig ausgebildet, insbesondere die Einheit aus Ausleger 17, Haltehülse 15 und Außenlagerring 22.

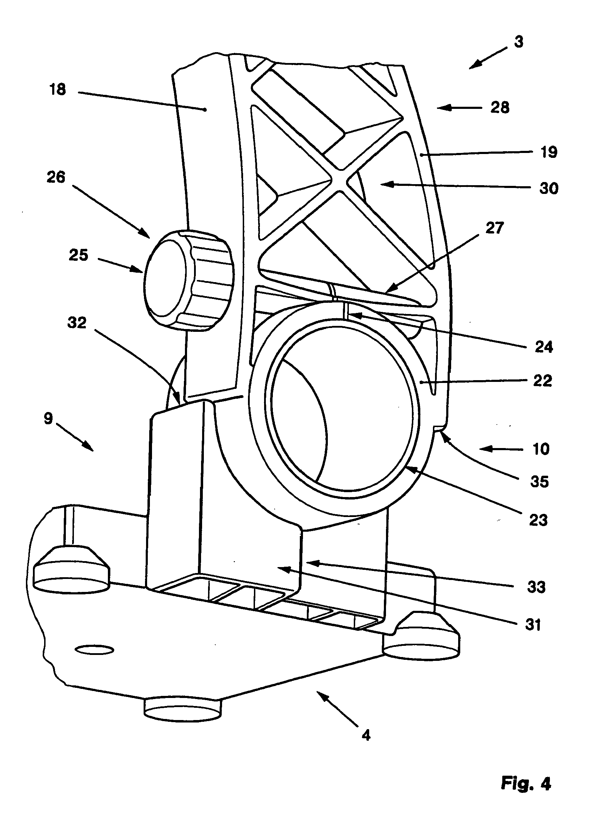

Figur 4 ist eine abschnittsweise perspektivische Ansicht der Ständerbohrmaschine, welche den Tragarm 3 am Lagerblock 9 gelagert zeigt. Dabei ist die Außenhülse 22 auf das Innenlager 23 aufgeschoben.

Die Ständerbohrmaschine weist Schwenkpositionierer auf, mit welchen der Tragarm 3 in einer vorbestimmten Schwenkstellung bezüglich des Bohrtisches 4 positionierbar ist. Die Schwenkpositionierer können beispielsweise als Rastmechanismen oder Anschläge ausgebildet sein.

In dieser Ausführungsform der Erfindung sind zwei Endanschläge vorgesehen. Hierzu weist der Lagerblock 9 einen das Gelenk 10 abschnittsweise umgreifenden Anschlagvorsprung 31 auf. Der Anschlagvorsprung 31 weist eine erste Anschlagsfläche 32 auf, mit welcher sich der Tragarm 3 in seiner Arbeitsstellung in Anlage befindet, und eine zweite Anschlagsfläche 33, mit welcher sich der Tragarm 3 in seiner Transportstellung in Anlage befindet. Der Tragarm weist zwei radial auswärts vom Außenring 22 vorstehende Vorsprünge 34, 35 auf. Ein erster 34 dieser Vorsprünge kann mit der ersten Anschlagsfläche 32 in Anlage gebracht werden und der zweite 35 der Vorsprünge mit der zweiten Anschlagsfläche 33.

In dieser Ausführungsform der Erfindung sind die Längsholme 18, 19 tangential an dem Außenlagerring 22 angeordnet und bilden mit ihren Endbereichen die beiden radialen Vorsprünge 34, 35.

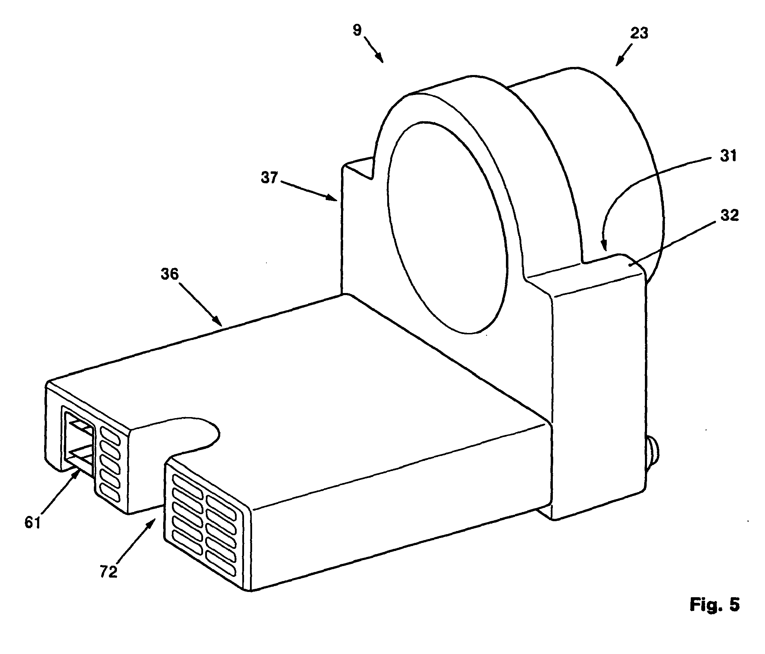

Der Lagerblock 9 ist durch Einschieben in ein Lagerprofil des Bohrtisches an diesem angebracht, wobei das Lagerprofil im Inneren des Bohrtisches vorgesehen ist. In Figur 5 ist der Lagerblock 9 in einer perspektivischen Ansicht gezeigt. Er weist einen Lagerfuß 36 auf, welcher sich von einem Basisabschnitt 37 des Lagerblocks 9 ausgehend erstreckt. Der Lagerfuß 36 wird schubladenartig in das Lagerprofil des Bohrtisches 4 eingeschoben. An dem Lagerfuß 36 ist ein Stecker 61 vorgesehen.

Der Basisabschnitt 37, der Lagerfuß 36, der Anschlagvorsprung 31 und das Innenlager 23 sind vorzugsweise einstückig miteinander ausgebildet.

Der Lagerfuß 36 weist eine Ausnehmung 72 auf, welche zu einem die Arbeitsfläche 6 unterbrechenden Durchbohrloch 46, in welches der Bohrer 13 eintauchen kann, korrespondiert. Auf diese Weise wird der Lagerblock vor einem Durchbohren geschützt.

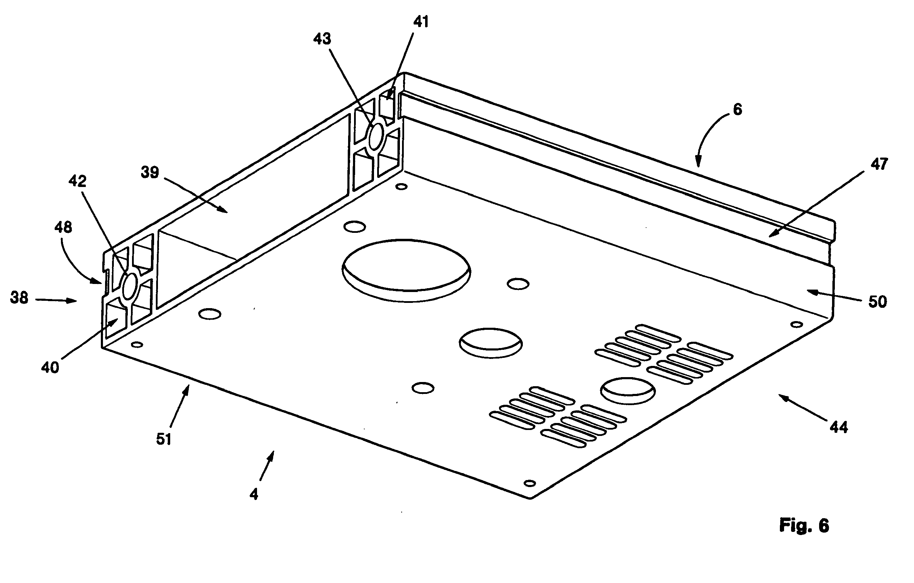

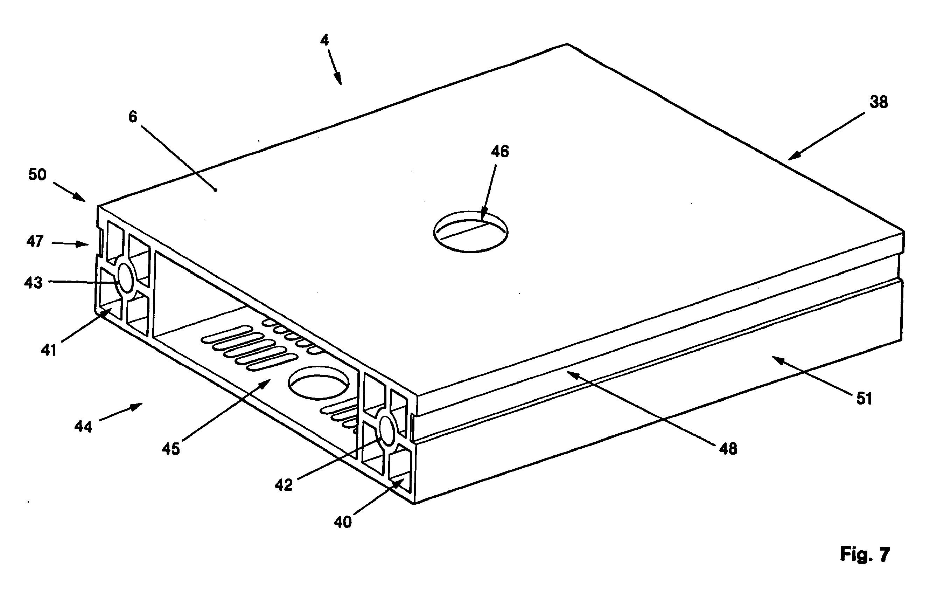

Der Bohrtisch 4 ist in den Figuren 6 und 7 perspektivisch gezeigt. Der Bohrtisch 4 weist in seinem Inneren ein zu seiner Rückseite 38 hin offenes Lagerfußaufnahmefach 39 auf, das als Lagerprofil für den Lagerfuß 36 dient und zu dessen Längsprofil korrespondierend ausgebildet ist. Seitlich des Lagerfußaufnahmefaches 39 sind Stabilisierungsprofile 40, 41 im Inneren des Bohrtisches 4 vorgesehen. In jedes der Stabilisierungsprofile 40, 41 ist ein Rohr 42, 43 integriert.

Die Stabilisierungsprofile 40, 41 erstrecken sich bis zur Vorderseite 44 des Bohrtisches 4 und sind dort benachbart zu einem im Inneren des Bohrtisches 4 ausgebildeten Energieversorgungsfach 45 vorgesehen.

In dem Energieversorgungsfach kann wenigstens eine Batterie, und/oder wenigstens ein Akkumulator als Energiequelle für die Bohreinheit 2 untergebracht werden. Mit der Batterie und/oder dem Akkumulator ist die Ständerbohrmaschine unabhängig von einem Energieanschluss betreibbar, z. B. auf Baustellen ohne Energieversorgung. Die Batterie und/oder der Akkumulator wird in dem Energieversorgungsfach außerhalb eines für den Bohrer 13 zugänglichen Bereiches angeordnet. Vorzugsweise wird die wenigstens eine Batterie und/oder der wenigstens eine Akkumulator vor und/oder hinter einem Schwenkbereich des Bohrers 13 in dem Energieversorgungsfach 45 angeordnet, insbesondere vor/oder hinter dem Durchbohrloch 46, in welches der Bohrer 13 eintauchen kann.

Die Batterie und/oder der Akkumulator kann in einer Batterieeinheit 60 untergebracht sein, welche schubladenartig in das Energieversorgungsfach 45 einführbar ist.

In dem Energieversorgungsfach kann in analoger Weise außerhalb eines für den Bohrer 13 zugänglichen Bereiches ein Ladegerät für den wenigstens einen Akkumulator vorgesehen sein.

In dem Bohrtisch 4 kann ein Kabelfach vorgesehen sein, beispielsweise für ein Kabel des Ladegerätes oder für ein Kabel, mit welchem die Bohreinheit von einer alternativen Energiequelle mit Energie versorgt werden kann.

Der Bohrtisch 4 kann aus Aluminium hergestellt sein. Es ist auch möglich, ihn aus Grauguss auszubilden, wobei dieses Material gute schwingungsdämpfende Eigenschaften hat. Vorzugsweise ist der Bohrtisch aus einem Strangpressprofil hergestellt, wobei das Lagerfußaufnahmefach und das Energieversorgungsfach jeweils Teil eines durchgehenden Profils sind.

Der Bohrtisch 4 weist an zur Arbeitsfläche jeweils benachbarten Seiten 50, 51 sich längs erstreckende Führungsprofile 47, 48 zum verschiebbaren Führen eines Schraubstockes auf. In den Figuren 1 und 2 ist ein Schraubstock 49 gezeigt. Er sitzt auf der Arbeitsfläche 6 und greift seitlich in die Führungsprofile 47, 48 ein.

Der Schraubstock 49 weist eine erste Haltebacke 52 und eine zweite Haltebacke 53 auf, die beide in die Führungsprofile 47, 48 eingreifen und diesen führbar sind. Die erste Haltebacke 52 ist in ihrer Relativlage zum Bohrtisch an diesem mit Hilfe von Arretiermechanismen 54, 55 arretierbar. Die Arretiermechanismen 54, 55 sind mit Hilfe von Drehknöpfen 56, 57 bedienbar. Die zweite Haltebracke 53 wird mit Hilfe von Schraubmechanismen 58, 59 relativ zur ersten Haltebacke und in den Führungsprofilen 47, 48 geführt verstellt.

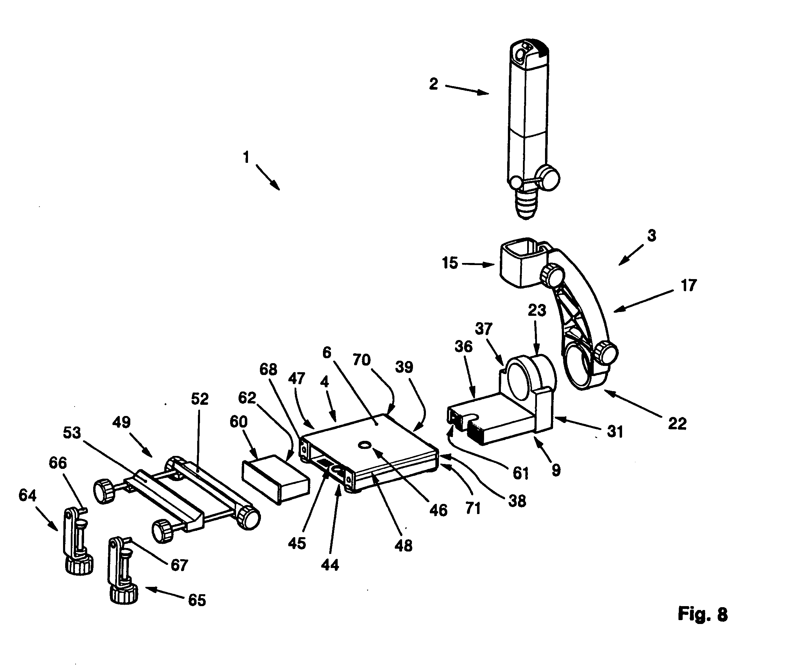

Der Schraubstock 49 ist aus den Führungsprofilen herausnehmbar und in diese wieder einsetzbar. In der Explosionsdarstellung in Figur 8 ist der Schraubstock 49 separat gezeigt.

In dieser Darstellung ist auch die Batterieeinheit 60 gezeigt, welche an ihrer Rückseite einen Gegenstecker 62 aufweist, welcher zum Stecker 61 des Lagerblocks 9 korrespondiert. Der Lagerblock 9 und die Batterieeinheit 6 kommen im Inneren des Bohrtisches 4 in Anlage aneinander, wobei der Stecker 61 und der Gegenstecker 62 zusammengesteckt werden. Die Energie der Batterieeinheit wird durch den Lagerblock 9 geleitet und von dort über ein in Figur 1 gezeigtes Kabel 63 der Bohreinheit 2 zugeführt.

In den Figuren 1 und 2 ist die Batterieeinheit 60 in einem in den Bohrtisch 4 eingesetzten Zustand gezeigt.

In Figur 8 sind Tischklemmer 64, 65 gezeigt, mit welchen die Ständerbohrmaschine an einem Arbeitstisch festklemmbar ist. Die Tischklemmer 64, 65 weisen Haltestifte 66, 67 auf, mit welchen die Tischklemmer 64, 65 an dem Bohrtisch 4 befestigbar sind. Die Haltestifte 66, 67 werden jeweils in eines der Rohre 42, 43 der Stabilisierungsprofile 40, 41 eingeführt und in diesen mit einer Presspassung gehalten. Dabei werden die Haltestifte 66, 67 durch Verschlussstücke 68, 69 für die vorderseitigen Enden der Stabilisierungsprofile 40, 41 hindurchgeführt und kommen an den Verschlussstücken 68, 69 in Anlage, wie in Figur 1 gezeigt.

Die Tischklemmer 64, 65 können einfach von dem Arbeitstisch 4 abgenommen werden, beispielsweise wenn diese nicht gebraucht werden oder für den Transport der Ständerbohrmaschine, wie in Figur 2 gezeigt.

Die vorderseitigen Verschlussstücke 68, 69 setzen die Kontur der Führungsprofile 47, 48 fort, wodurch der Schraubstock 49 trotz der Verschlussstücke am Bohrtisch 4 anbringbar und von diesem abnehmbar ist.

Die Stabilisierungsprofile 40, 41 werden an der Rückseite 38 des Bohrtisches 4 mit Verschlussstücken 70, 71 verschlossen, welche als Stopper für die Führungsprofile 47, 48 dienen.

Die Bohreinheit, der Tragarm, der Lagerblock und der Bohrtisch sind modulartige Hauptkomponenten der erfindungsgemäßen Ständerbohrmaschine, die schnell und einfach zusammensetzbar sind.

Das Vorsehen von Energieversorgungskomponenten, wie z. B. von Batterien, Akkumulatoren, einem Ladegerät oder Kabeln, das Vorsehen der Verschwenkbarkeit des Tragarmes zwischen seiner Arbeitsstellung und seiner Transportstellung, das Vorsehen eines Schraubstockes, und das Vorsehen von Tischklemmern sind jeweils voneinander unabhängige Aspekte.

## Patentansprüche

1. Mobile Ständerbohrmaschine (1) mit einer Bohreinheit (2), einem die Bohreinheit tragenden Tragarm (3) und einem Bohrtisch (4), an welchem der Tragarm befestigt ist, wobei der Tragarm relativ zum Bohrtisch zwischen einer Arbeitsstellung (5), in welcher der Tragarm bezüglich des Bohrtisches aufgerichtet ist, und einer Transportstellung (8), in welcher der Tragarm bezüglich des Bohrtisches umgeklappt ist, schwenkbar ist.

2. Ständerbohrmaschine nach Anspruch 1, wobei die Bohreinheit (2) relativ zum Tragarm (3) verschiebbar ist.

3. Ständerbohrmaschine nach Anspruch 1 oder 2, wobei die Bohreinheit (2) am Tragarm (3) festklemmbar ist.

4. Ständerbohrmaschine nach wenigstens einem der vorhergehenden Ansprüche, wobei die Bohreinheit (2) in einer geschlitzten Haltehülse (15) des Tragarmes (3) aufgenommen ist.

5. Ständerbohrmaschine nach wenigstens einem der vorhergehenden Ansprüche, wobei der Tragarm in einer Schwenkstellung lösbar fixierbar ist.

6. Ständerbohrmaschine nach wenigstens einem der vorhergehenden Ansprüche, wobei ein Gelenk (10), mit welchem der Tragarm (3) relativ zum Bohrtisch (4) schwenkbar gelagert ist, in einer Schwenkstellung festklemmbar ist.

7. Ständerbohrmaschine nach Anspruch 6, wobei das Gelenk (10) einen geschlitzten Außenlagerring (22) aufweist, welcher auf einem Innenlager (23) drehbar gelagert ist.

8. Ständerbohrmaschine nach wenigstens einem der vorhergehenden Ansprüche, wobei wenigstens ein Schwenkpositionierer vorgesehen ist, mit welchem der Tragarm (3) in einer vorbestimmten Schwenkstellung positionierbar ist.

9. Ständerbohrmaschine nach wenigstens einem der vorhergehenden Ansprüche, wobei wenigstens ein Endanschlag (32, 33) vorgesehen ist, mit welchem sich der Tragarm (3) in seine Arbeitsstellung (5) und/oder in seine Transportstellung (8) in Anlage befindet.

10. Ständerbohrmaschine nach wenigstens einem der vorhergehenden Ansprüche, wobei der Tragarm (3) eine fachwerkartige Struktur (28) aufweist.

11. Ständerbohrmaschine nach wenigstens einem der vorhergehenden Ansprüche, wobei der Tragarm (3) aus Aluminium oder Grauguss hergestellt ist.

12. Ständerbohrmaschine nach wenigstens einem der vorhergehenden Ansprüche, wobei der Bohrtisch (4) aus Aluminium oder Grauguss hergestellt ist.

13. Ständerbohrmaschine nach wenigstens einem der vorhergehenden Ansprüche, wobei der Bohrtisch (4) ein Strangpressprofil ist.

14. Ständerbohrmaschine nach wenigstens einem der vorhergehenden Ansprüche, wobei ein Akkumulator (60) als Energiequelle für die Bohreinheit (2) im Bohrtisch (4) untergebracht ist.

15. Ständerbohrmaschine nach wenigstens einem der vorhergehenden Ansprüche, wobei ein Ladegerät für einen Akkumulator im Bohrtisch (4) untergebracht ist.

16. Ständerbohrmaschine nach wenigstens einem der Ansprüche 14 und 15, wobei ein Akkumulator (60) und/oder ein Ladegerät außerhalb eines für einen Bohrer (13) erreichbaren Bereiches angeordnet ist.

17. Ständerbohrmaschine nach wenigstens einem der Ansprüche 14 bis 16, wobei außerhalb eines Schwenkbereichs eines Bohrers (13) ein Akkumulator (60) und/oder ein Ladegerät angeordnet ist.

18. Ständerbohrmaschine nach wenigstens einem der vorhergehenden Ansprüche, wobei im Bohrtisch (4) ein Kabelfach vorgesehen ist.

19. Ständerbohrmaschine nach wenigstens einem der vorhergehenden Ansprüche, wobei der Bohrtisch (4) seitlich wenigstens ein Führungsprofil (47, 48) aufweist, mit welchem ein Schraubstock (49) führbar ist.

20. Ständerbohrmaschine nach wenigstens einem der vorhergehenden Ansprüche, wobei der Tragarm (3) an einem Lagerblock (9) befestigt ist, welcher durch Einschieben in ein Lagerprofil (39) des Bohrtisches (4) an diesem angebracht ist.

21. Ständerbohrmaschine nach Anspruch 20, wobei das Lagerprofil (39) im Inneren des Bohrtisches (4) vorgesehen ist.
